Europäisches Patentamt

**European Patent Office**

**Office européen des brevets**

(11) Numéro de publication: **0 070 781**
**A1**

## DEMANDE DE BREVET EUROPEEN

(21) Numéro de dépôt: **82401342.9**

(51) Int. Cl.³: **B 25 J 15/02**

(22) Date de dépôt: **19.07.82**

(30) Priorité: **17.07.81 FR 8113988**

(43) Date de publication de la demande: **26.01.83**
**Bulletin 83/4**

(84) Etats contractants désignés: **AT BE CH DE GB IT LI LU NL SE**

(71) Demandeur: **Société PHAREMME, Les Nouhauts, F-87370 Saint-Sulpice-Lauriere Haute-Vienne (FR)**

(72) Inventeur: **Coussot, Serge, Le Moulin des Vergnes, F-87370 Bersac-sur-Rivalier (FR)**
Inventeur: **Nouguerede Pascal, 36, rue de la Rouquette, F-33220 Port St Foy (FR)**

(74) Mandataire: **Chevallier, Robert, Cabinet BOETTCHER 23, rue La Boétie, F-75008 Paris (FR)**

(54) **Pince de préhension rotative pour bras rotatif.**

(57) Un organe moteur rotatif (1) est fixé à un premier organe (3) d'un vérin hydraulique linéaire dont le second organe (9) coulisse sur ce premier organe (3) en poussant une came d'écartement (15) de deux mâchoires (7) qui sont montées pivotantes sur une cloche (4) calée en rotation à l'extrémité (2A) de l'arbre de sortie (2) de l'organe moteur (1) s'étendant librement à l'intérieur du premier organe (3).

EP 0 070 781 A1

1    0070781

Pince de préhension rotative pour bras rotatif.

L'invention a pour objet une pince de préhension pouvant être montée sur un bras rotatif et qui est elle-même susceptible de saisir un objet avec une orientation quelconque sur 270° au moins autour de son propre axe géométrique.

On connaît déjà des pinces de préhension pour appareils de manipulation à distance ou pour automates. Ces pinces comprennent en général deux mâchoires opposées qui sont déplaçables dans un seul plan. Il faut orienter différemment l'ensemble de la pince pour que les mâchoires agissent dans un plan différent.

Une seule pince décrite dans le brevet français n° 1 444 179 sous le titre "Télémanipulateur perfectionné" comprend un corps qui contient le mécanisme de la pince et des moyens de rotation de ce mécanisme autour de l'axe géométrique général de l'ensemble. Ce télémanipulateur est à manoeuvre totalement électromagnétique, même pour le déplacement des mâchoires. Il s'en suit qu'il est composé de deux moteurs électriques et de nombreuses pièces diverses qui assurent la transformation du mouvement de rotation en pivotement de faible amplitude des deux mâchoires. Or, on sait que les moyens de commande hydraulique sont préférés dans de nombreuses circonstances en raison de leur plus grande simplicité de construction et de leur plus grande souplesse de fonctionnement.

L'invention a donc pour but principal d'apporter une pince rotative sur 270° au moins qui conserve les avantages des circuits hydrauliques pour la manoeuvre des mâchoires.

Un but secondaire de l'invention est de parvenir à une pince telle que définie ci-dessus dont la conception permet de la monter à l'extrémité d'un bras qui est lui-même tournant autour de son axe sur 270° au moins à l'aide de moyens hydrauliques.

Un autre but encore de l'invention est de parvenir à une pince hydraulique, tournante sur 270° au moins, dont la conception lui donne un encombrement faible grâce auquel il est possible de la monter sur un bras tournant avec une possibilité supplémentaire d'oscillation sur une amplitude de 270° au moins dans le plan de ce bras.

Cn atteint le but principal de l'invention avec une pince comprenant un vérin hydraulique rotatif ayant un arbre de sortie prolongé, un premier organe d'un vérin hydraulique à course linéaire entourant l'arbre prolongé du vérin rotatif, ce premier organe étant fixé au corps du vérin totatif et laissant libre en rotation l'arbre prolongé. A l'extrémité libre de ce dernier est calée en rotation par son fond une cloche dont la jupe s'étend concentriquement autour du premier organe du vérin, cette cloche ayant deux échancrures opposées dans lesquelles sont montées respectivement chacune autour d'un pivot transversal deux mâchoires opposées. Chaque mâchoire a une partie extérieure à la cloche apte à recevoir un mors approprié et une partie intérieure à la cloche apte à coopérer avec une came d'écartement. Un second organe du vérin hydraulique linéaire est monté coulissant sur le premier organe, en limitant avec lui une chambre de pression, à l'intérieur de la cloche. Sur ce second organe est montée libre en rotation la came d'écartement ayant une face extérieure inclinée coopérant avec chaque extrémité libre intérieure des mâchoires. L'alimentation de la chambre de pression se fait par un canal au moins foré dans le premier organe du vérin hydraulique. Lorsque celui-ci est du type à simple effet, un ressort de compression est placé entre le fond de la cloche et la came d'écartement concentriquement au premier organe du vérin qui lui-même entoure l'arbre prolongé.

Comme ce vérin est alimenté par une tubulure fixe, il est facile d'attacher l'ensemble de la pince à une première extrémité d'un bras qui est lui-même monté tournant sur 270° au moins autour de son axe géométrique à l'aide d'un joint tournant prévu à sa seconde extrémité. Ce joint tournant est enfermé dans un palier fixe d'une structure creuse dans laquelle est logé un moteur hydraulique rotatif sur 270° au moins. Ce joint tournant sert à assurer le passage du fluide sous pression au vérin rotatif de la pince et au vérin linéaire de la pince.

On peut améliorer encore ce montage, grâce au faible encombrement de la pince, de la façon suivante.

Le palier qui contient le joint tournant est prolongé par une chape ayant deux branches parallèles entre lesquelles est monté libre en rotation à leur partie extrême un tourillon transversal. Ce tourillon est traversé par une ouverture diamétrale, entre les branches de la chape; le vérin hydraulique rotatif de la pince est fixé à ce tourillon, entre les branches de la chape et son arbre prolongé passe par l'ouverture diamétrale. Le premier organe du vérin hydraulique linéaire est fixé au tourillon, à l'opposé du vérin hydraulique rotatif. Sur un côté de la chape, le tourillon est prolongé au-delà d'une branche de la chape et il est muni intérieurement d'un second joint tournant tandis qu'il est pourvu extérieurement d'une poulie avec laquelle il est calé en rotation. Transversalement aux deux branches de la chape, au-dessus du vérin hydraulique rotatif, est monté un troisième vérin rotatif ayant un arbre de sortie qui s'étend au-delà d'une branche du même côté que le tourillon prolongé. Cet arbre de sortie est équipé d'une poulie et une courroie réunit celle-ci à la poulie montée sur le coulisseau.

Le troisième vérin rotatif est alimenté à partir du premier joint tournant qui, dans ce cas, alimente le second joint tournant à partir duquel sont alimentés le vérin linéaire et le vérin tournant de la pince.

De préférence, chaque joint tournant comprend des gorges de circulation du fluide disposées en alternance avec des gorges contenant un joint d'étanchéité, les deux gorges extrêmes de circulation du fluide étant raccordées à un canal de drainage qui recueille les fuites possibles des gorges de circulation de fluide comprises entre deux gorges à joint d'étanchéité.

On donnera maintenant, sans intention limitative, une description d'un exemple de réalisation d'une pince selon l'invention et d'un bras équipé de cette pince. On se reportera aux dessins annexés dans lesquels :

- la figure 1 est une vue en coupe par un plan longitudinal d'une pince hydraulique tournante conforme à l'invention,

- la figure 2 est une vue en coupe par un plan longitudinal d'une première moitié en sens longitudinal d'un bras
tournant équipé d'une pince analogue à celle de la figure 1,
conformément à l'invention ,

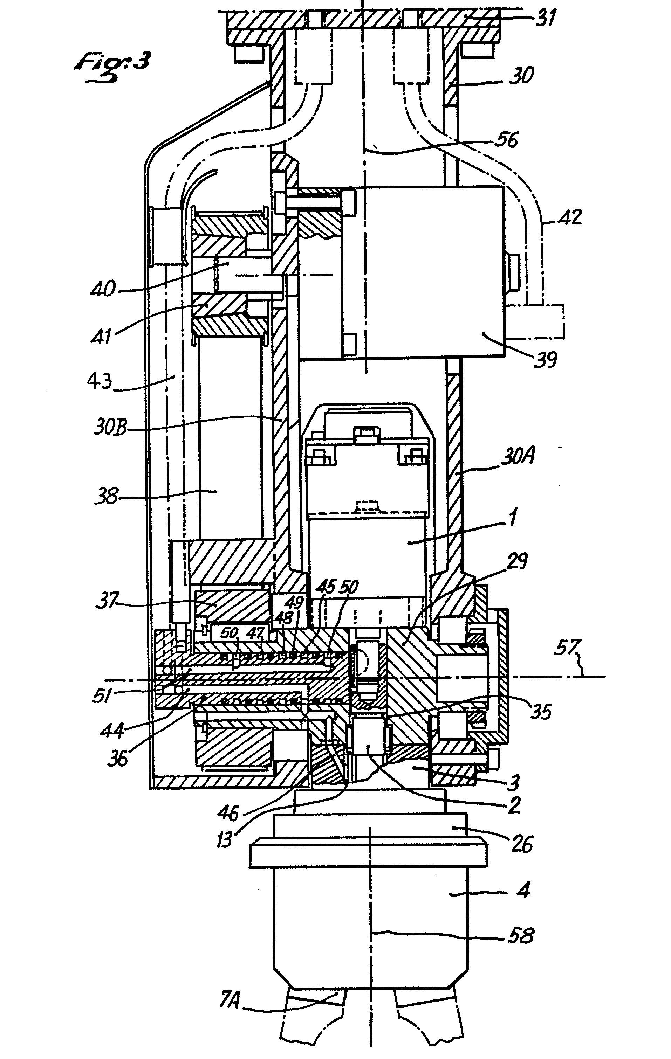

- la figure 3 est une vue à raccorder à la figure 2 et
qui montre la seconde moitié du bras équipé d'une pince.

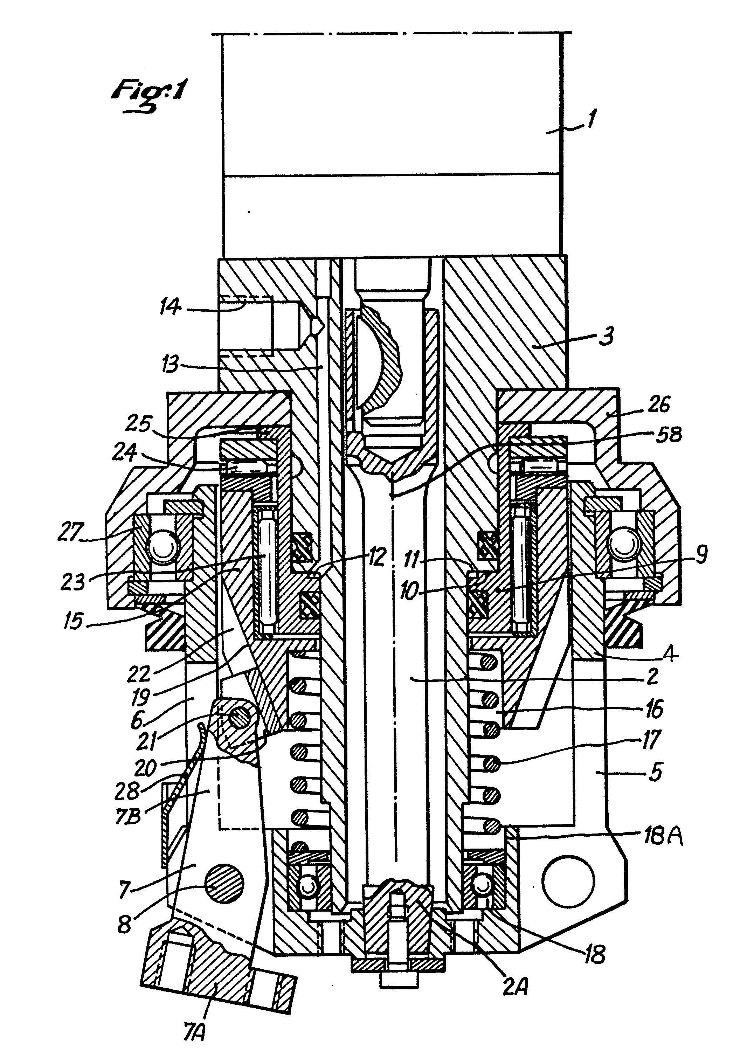

La pince représentée sur la figure 1 comprend
un vérin hydraulique rotatif 1, disponible dans le commerce
et qu'il n'est pas nécessaire de décrire ici, ayant une
amplitude de rotation de 270°. Toutefois, cette valeur n'est
pas imposée par l'invention; un vérin ayant une amplitude
plus faible ou plus importante allant jusqu'à 360° pourrait
être adopté. Ce vérin hydraulique rotatif 1 a un arbre de
sortie prolongé 2 qui se termine par une partie extrême
libre 2A. Un premier organe 3 d'un vérin hydraulique à
course linéaire est fixé au corps du vérin rotatif 1 et
entoure l'arbre prolongé 2 de ce dernier. On verra plus loin
qu'il n'est pas nécessaire que le premier organe 3 soit fixé
directement au corps du vérin rotatif 1; il est possible de
prévoir une pièce intermédiaire qui servirait à réunir ces
deux pièces en étant interposée entre elles. Le premier
organe 3 laisse complètement libre en rotation l'arbre
prolongé 2 et s'arrête un peu avant la partie extrême libre
2A de ce dernier. Cette extrémité libre 2A sert à la fixation d'une cloche 4 qui tourne avec l'arbre prolongé 2 et
dont la jupe s'étend concentriquement autour du premier
organe 3 sur une partie importante de la longueur de celui-
-ci. Dans la cloche 4 sont pratiquées en partie dans son
fond et en partie dans sa jupe deux échancrures 5 et 6
diamétralement opposées dans chacune desquelles est montée
une mâchoire 7 (une seule est représentée sur la figure 1).
Chaque mâchoire 7 est pivotante grâce à un pivot 8 monté
transversalement à l'échancrure 6, ou 5. Chaque mâchoire 7
présente une partie extrême 7A qui s'étend à l'extérieur
de la cloche 4 et qui est conformée pour pouvoir recevoir
un mors (non représenté) approprié à la pièce à saisir.
De l'autre côté du pivot 8, chaque mâchoire 7 a une partie
extrême qui s'étend à l'intérieur de la cloche 4 et qui est apte à coopérer avec une came d'écartement.

Un second organe 9 faisant partie du vérin hydraulique linéaire est monté coulissant sur le premier organe 3. Grâce à deux épaulements, l'un intérieur 10, l'autre extérieur 11, qui se font face, les deux organes 3 et 9 limitent entre eux une chambre de pression 12. Un canal 13 foré dans le premier organe fixe 3 s'étend à partir de la chambre 12 pour la mettre en communication avec un orifice de raccordement 14 accessible de l'extérieur.

Sur le second organe 9 est montée une came d'écartement 15 qui se déplace avec cet organe 9 et qui présente dans sa face extrême éloignée de ce dernier une cuvette 16. Celle-ci est destinée à contenir un ressort de compression 17 dont l'autre extrémité s'applique contre la bague extérieure d'un roulement à bille 18. Ce dernier est introduit dans un logement 18A ménagé dans le fond de la cloche et sa bague intérieure est montée sur le premier organe fixe 3. La came d'écartement 15 a une face extérieure inclinée 19, au moins dans la zone où elle est destinée à coopérer avec l'extrémité de la partie extrême libre de chaque mâchoire 7.

On peut constater que la cloche 4 et les mâchoires 7 tournent en même temps que l'arbre prolongé 2 du vérin rotatif 1 et que la came d'écartement 15 est simplement coulissante et qu'il n'est pas obligatoire qu'elle puisse être entraînée en rotation. Dans ce cas, un moyen anti-friction devrait être interposé entre la face extérieure inclinée 19 de la came 15 et la partie extrême 7B des mâchoires 7. En pratique, un tel moyen pourrait être un roulement à rouleaux qui aurait , nécessairement, un diamètre relativement important. Afin de réduire l'encombrement transversal de la pince, on a adopté, dans le présent exemple, une autre manière de monter la came d'écartement 15. L'extrémité de la partie extrême 7B de chaque mâchoire 7 est équipée d'un patin 20 monté oscillant autour d'un axe 21. Chaque patin 20 est engagé dans une rainure 22 creusée dans l'épaisseur de la came d'écartement 15 et dont le fond 19 constitue la face inclinée mentionnée plus haut. De cette façon, la came 15 est entraînée en rotation avec la cloche 4.

Pour supprimer le frottement entre la came 15 et le second organe coulissant 9 du vérin hydraulique linéaire, un roulement cylindrique à aiguilles 23 est interposé entre ces deux pièces et une butée annulaire à aiguilles 24 est placée entre la face extrême de la came 15 et une collerette extérieure 25 prévue à l'extrémité du second organe coulissant 9. Ce dernier pousse la came 15 par sa collerette 25, par l'intermédiaire du roulement annulaire à aiguilles 24.

Afin que la cloche 4 soit bien guidée en rotation, un chapeau 26 est fixé au premier organe 3 et enveloppe la partie terminale de la cloche 4. Un roulement à bille 27 est disposé entre la face extérieure de la cloche 4 et la face intérieure du chapeau 26.

Le fluide sous pression envoyé par le canal 13 dans la chambre de pression 12 repousse le second organe 9 qui pousse à son tour la came 15 et celle-ci écarte les parties extrêmes 7B des mâchoires 7, de sorte que les parties extrêmes 7A, et les mors qui y sont fixés, se rapprochent. Quand on supprime la pression dans la chambre 12, le ressort 17 fait reculer la came 15. Des ressorts plats 28 sont fixés à la face extérieure de la cloche 4 et s'appuient contre la partie extrême 7B des mâchoires 7 et provoquent, à ce moment, l'éloignement des parties extrêmes 7A et l'ouverture des mors. En variante, on pourrait utiliser un vérin hydraulique linéaire à double effet et supprimer le ressort 17.

Les mâchoires 7 se déplacent dans un plan diamétral et elles peuvent tourner avec la cloche 4. Leur rotation n'est limitée en rien, sauf par l'amplitude propre du vérin hydraulique rotatif. Il est évident que si ce dernier, ou un moteur équivalent d'un autre type, pouvait effectuer plusieurs tours, la pince de l'invention serait totalement rotative tout en conservant son faible encombrement et la simplicité de sa construction.

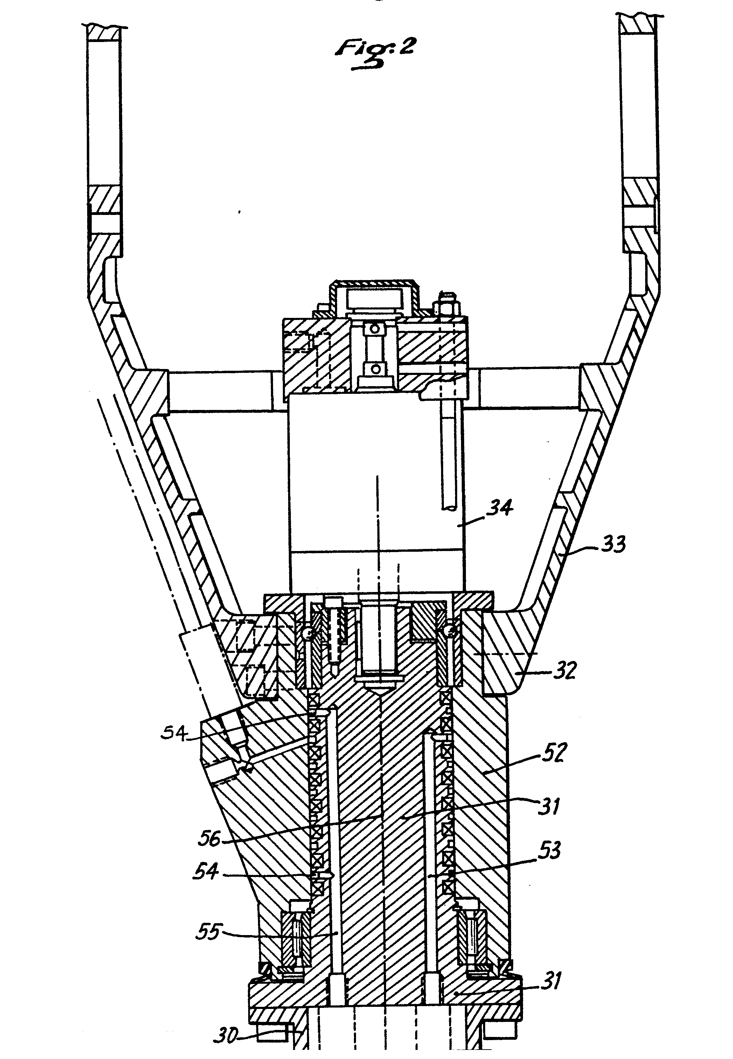

On se reportera maintenant à la figure 2 pour expliquer comment la pince de l'invention peut être utilisée avec un bras qui est lui-même un bras rotatif, la pince elle-même pouvant être oscillante dans le plan de ce bras tout en restant rotative.

Dans cet exemple, le vérin hydraulique rotatif 1 n'est pas fixé directement au premier organe 3 du vérin hydraulique linéaire. Au contraire, ces deux pièces sont réunies l'une à l'autre par l'intermédiaire d'un tourillon 29. Ce dernier est monté libre en rotation, grâce à deux roulements à billes, à la partie extrême libre des deux branches 30A, 30B d'une chape 30. Celle-ci est fixée par sa base à l'élément mobile 31 d'un joint tournant qui est supporté par un palier 32. Celui-ci se trouve à une extrémité d'une ossature 33 d'un bras à l'intérieur duquel est monté un vérin 34, rotatif sur 270° au moins, qui est accouplé en rotation avec l'élément mobile 31 du joint tournant.

Après la description de la structure générale d'un bras équipé d'une pince rotative conformément à l'invention, on donnera maintenant celle des détails constitutifs des divers organes.

Entre les branches 30A et 30B le tourillon 29 présente une ouverture centrale et diamétrale 35 à travers laquelle passe l'arbre de sortie prolongé 2 du vérin hydraulique rotatif 1 de la pince. Ce tourillon 29 s'étend au-delà de la branche 30B à l'extérieur de la chape 30 et il est muni intérieurement, dans cette partie et jusqu'à l'ouverture centrale 35, d'un élément fixe 36 d'un joint tournant. Sur sa surface extérieure en dehors de la branche 30B est calée en rotation une poulie 37 à partir de laquelle s'étend une courroie 38. Dans les branches 30A et 30B de la chape 30 est fixé , transversalement, au-dessus de l'emplacement du vérin rotatif 1 de la pince, un troisième vérin rotatif 39 dont l'arbre de sortie 40 se trouve en dehors de la branche 30B. Sur cette arbre est calée en rotation une poulie 41 autour de laquelle passe la courroie 38. Celle-ci transmet au tourillon 29 tout mouvement de rotation du vérin 39 de sorte que celui-ci peut osciller entre les branches 30A et 30B en entraînant avec lui dans son mouvement l'ensemble de la pince. L'amplitude de ce mouvement d'oscillation est en rapport avec l'amplitude du mouvement du vérin rotatif 39. Ce dernier est fixe par rapport à la chape 30 et il est alimenté en fluide sous pression à partir de l'élément mobile 31 du joint tournant grâce à une tubulure de raccordement 42. Une autre tubulure de raccordement 43 s'étend à partir de l'élément mobile 31 du même joint tournant jusqu'à l'élément fixe 36 du joint tournant incorporé au tourillon 29. Dans cet élément fixe 36 sont percés quatre canaux longitudinaux dont deux seulement sont représentés. Un canal 44 aboutit à une gorge 45 qui est reliée par un premier canal radial à un second canal longitudinal suivi d'un troisième canal radial percés dans le tourillon 29. Ce dernier canal est prolongé à l'intérieur du premier organe 3 du vérin linéaire de la pince par un canal oblique 46 qui rejoint le canal 13 d'alimentation de la chambre de pression 12. Dans ce cas, l'orifice de connexion 14 est bouché. Deux autres canaux longitudinaux (non représentés) forés dans le tourillon 29 aboutissent respectivement à des gorges 47, 48 qui sont mises en communication avec des canaux (non représentés) servant à l'alimentation du vérin rotatif 1 de la pince. Les gorges 45, 47 et 48 sont séparées par des gorges supplémentaires 49 qui contiennent chacune un joint d'étanchéité. De part et d'autre des gorges extrêmes 45 et 47 se trouvent encore deux gorges munies d'un joint d'étanchéité, puis deux gorges 50 qui communiquent toutes deux avec le quatrième canal longitudinal 51. Ce dernier est relié par une tubulure non représentée à un réseau de drainage permettant de récupérer les fuites éventuelles pouvant se produire à partir des gorges 45, 47 et 48. Deux gorges supplémentaires sont encore prévues de part et d'autre des deux gorges 50 pour contenir chacune un joint d'étanchéité.

L'élément mobile 31 du joint tournant porté par le palier 32 est monté dans un manchon extérieur fixe 52 ; l'élément rotatif 31 est supporté à ses extrémités par des roulements antifriction appropriés, de préférence des roulements à aiguilles. Entre ces roulements sont prévues des gorges successives mises en communication avec des canaux longitudinaux. Un seul canal 53 qui est raccordé avec la tubulure 42 est visible sur la figure 2. Comme on vient de le décrire pour le joint tournant incorporé au tourillon 29, les différentes gorges sont séparées par des gorges supplémentaires contenant chacune un joint d'étanchéité et il existe aussi deux gorges extrêmes 54 réunies à un canal longitudinal 55 raccordé   par des moyens non représentés au circuit de récupération des fuites. Au-delà de ces gorges 54 se trouvent encore deux gorges supplémentaires contenant chacune un joint d'étanchéité.

Le bras que l'on vient de décrire a un axe géométrique général 56 sur lequel se trouvent le vérin rotatif 34, l'élément mobile 31 du joint tournant du bras, la chape 30, la pince elle-même quand celle-ci occupe sa position médiane entre ses limites extrêmes d'oscillation à l'intérieur de la chape 30. On dispose donc, à partir du vérin rotatif 34, d'un premier mouvement général de rotation autour de l'axe général 56. Pendant ce mouvement il est possible de faire osciller le tourillon 29 et avec lui l'ensemble de la pince à l'intérieur des branches 30A, 30B de la chape 30 à partir du vérin rotatif 39 par l'intermédiaire de la courroie 38, autour de l'axe géométrique 57 du tourillon 29, qui est orthogonal à l'axe 56. Il est encore possible, en même temps, de faire tourner la pince sur elle-même autour de son propre axe longitudinal 58 quand elle occupe une position quelconque de son mouvement d'oscillation. Enfin, les mâchoires 7 peuvent être manoeuvrées à une position quelconque du bras ou de la pince ou pendant l'exécution des mouvements que l'on vient de décrire.

On notera que, dans les circonstances où l'on ne souhaite pas utiliser la possibilité d'oscillation de la pince à l'intérieur de la chape 30, il est possible d'immobiliser le tourillon 29 ou de le remplacer par un axe fixe et de supprimer aussi le vérin rotatif 39. On obtient alors un bras simplifié avec lequel deux mouvements de pivotement sont possibles, d'une part celui de l'ensemble du bras autour de l'axe géométrique 56, d'autre part celui de la pince autour de son axe géométrique 58.

L'invention apporte donc un bras équipé d'une pince avec une grande souplesse d'exécution de mouvements rotatifs, avec un encombrement faible. On notera particulièrement que les mouvements de rotation autour des axes géométriques 56 et 58 ne sont limités que par l'amplitude des vérins rotatifs hydrauliques. Les vérins de ce genre disponibles dans le commerce ont une amplitude limitée à 270°. Si des vérins hydrauliques, ou des moteurs d'un autre type, ayant une amplitude plus grande ou une possibilité de rotation sur plusieurs tours, étaient utilisés, le bras et la pince de l'invention pourraient en être équipés, la conception même du bras et de la pince conformes à l'invention le permettant sans difficulté.

REVENDICATIONS

1. Pince de préhension munie de deux mâchoires opposées (7) mobiles dans un plan autour de pivots (8), comprenant un organe moteur rotatif (1) ayant un arbre prolongé (2) pour la manoeuvre des mâchoires (7), caractérisée en ce que l'organe moteur (1) est réuni à un premier organe (3) d'un vérin hydraulique à course linéaire entourant librement l'arbre prolongé (2), ce dernier étant calé en rotation par son extrémité libre (2A) avec le fond d'une cloche (4) dont la jupe entoure concentriquement le premier organe (3), cette cloche (4) ayant deux échancrures opposées (6) dans lesquelles sont montées les mâchoires (7) avec une partie extrême (7A) extérieure à la cloche (4) et une partie extrême (7B) intérieure à cette même cloche (4), un second organe (9) du vérin hydraulique étant monté coulissant sur le premier organe (3) en limitant avec lui une chambre de pression (12), à l'intérieur de la cloche (4), une came d'écartement (15) étant montée libre en rotation sur le second organe (9) et ayant une face extérieure inclinée (19) coopérant avec la partie extrême intérieure (7B) de chaque mâchoire (7) pour provoquer la fermeture de la pince, des ressorts (28) assurant le rappel en ouverture des mâchoires (7) à la suite du retrait de la came d'écartement (15).

2. Pince selon la revendication 1 caractérisée en ce que l'organe moteur (1) est un vérin hydraulique rotatif ayant une amplitude de mouvement de·270° au moins.

3. Pince selon la revendication 1 caractérisée en ce que le vérin hydraulique à course linéaire constitué par le premier organe (3) et le second organe (9) est un vérin à simple effet alimenté en fluide par un canal (13) foré dans le premier organe (3) réuni à l'organe moteur (1), un ressort de rappel (17) étant interposé autour de l'arbre prolongé (2) entre le fond de la cloche (4) et la came d'écartement (15) entre les mâchoires (7).

4. Pince selon la revendication 1 caractérisée en ce que la face extérieure de la came d'écartement (15) présente deux rainures (22) ayant chacune une face inclinée (19) et la partie extrême intérieure (7B) de chaque mâchoire (7) est pourvue d'un patin articulé (20) engagé dans la rainure (22) correspondante, des moyens antifriction étant interposés entre la came d'écartement (15) et le second organe (9) du vérin hydraulique linéaire.

5. Pince selon la revendication 4 caractérisée en ce que les moyens antifriction comprennent un roulement annulaire à aiguilles (23) monté concentriquement entre la came d'écartement (15) et le second organe (9) et une butée à aiguilles (24) placée entre une collerette extrême (25) du second organe (9) et la came d'écartement (15).

6. Bras rotatif équipé de la pince selon l'une quelconque des revendications 1 à 5 caractérisé en ce qu'il comprend une structure (33) ayant un palier (32) supportant un manchon fixe (52) qui contient un élément mobile (31) d'un joint tournant accouplé en rotation à une extrémité à l'arbre d'un organe moteur rotatif (34) logé dans la structure (33) et à son autre extrémité à la base d'une chape (30) ayant deux branches (30A, 30B) à l'extrémité libre desquelles est monté transversalement un axe (29) traversé par une ouverture diamétrale (35) entre les branches (30A, 30B), cet axe servant à réunir l'organe moteur rotatif (1) de la pince et le premier organe (3) du vérin hydraulique linéaire de la pince, l'arbre prolongé (2) passant par l'ouverture (35).

7. Bras rotatif selon la revendication 6 caractérisé en ce que l'axe (29) est un tourillon monté tournant dans les branches (30A, 30B), se prolongeant à l'extérieur d'une branche (30B) et pourvu intérieurement d'un élément fixe (36) d'un joint tournant et extérieurement d'une poulie (37), un troisième organe moteur rotatif (39) étant supporté transversalement par les branches (30A, 30B) à proximité de la base de la chape (30), avec son arbre de sortie (40) s'étendant en dehors de ladite branche (30B) et étant pourvu d'une poulie (41) une courroie (38) passant autour des deux poulies (37, 41), le joint tournant comprenant le manchon fixe (52) et l'élément mobile (31) servant à alimenter le troisième moteur rotatif (39) et le joint tournant intégré au tourillon (29), tandis que ce dernier joint tournant sert à alimenter l'organe moteur rotatif (1) et le vérin hydraulique linéaire de la pince.

8. Bras rotatif selon l'une quelconque des revendications 6, 7 caractérisé en ce que chaque joint tournant comprend des gorges de circulation de fluide (45, 47, 48) entre lesquelles sont ménagées des gorges contenant un joint d'étanchéité, l'ensemble de ces gorges étant contenu entre deux gorges supplémentaires (50) réunies à un canal longitudinal (51) d'évacuation des fuites, ces gorges supplémentaires (50) étant elles-mêmes disposées entre deux gorges extrêmes contenant chacune un joint d'étanchéité.

Fig:1

Fig. 2

*Fig.3*

0070781

Office européen
des brevets

**RAPPORT DE RECHERCHE EUROPEENNE**

Numéro de la demande

EP  82 40 1342

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,Y | GB-A- 781 465  (KENWARD)<br>* figure 1; page 4, lignes 35 à 54 * | 1,2,8 | B 25 J  15/02 |
| Y | US-A-3 381 485  (CROOKS et al.)<br>* figures 7,8,8a; colonne 7, ligne 65 à colonne 9, ligne 4 * | 1,6-8 | |
| A | FR-A-2 217 126  (DAINI SEIKOSHA) | 3 | |
| A | US-A-2 822 094  (GREER) | | |
| A | FR-A-2 243 050  (SERAMM) | | |
| A | US-A-3 734 556  (MISAWA) | | |

DOMAINES TECHNIQUES RECHERCHES (Int. Cl. ³)

B 25 J
B 66 C

_Le présent rapport de recherche a été établi pour toutes les revendications_

| Lieu de la recherche<br>LA HAYE | Date d'achèvement de la recherche<br>01-10-1982 | Examinateur<br>LAMMINEUR P.C.G. |
|---|---|---|